# EUROPEAN PATENT APPLICATION

(11) **EP 3 236 368 A1**
(43) Date of publication of application: **25.10.2017**
(21) Application number: 17166791.8
(22) Date of filing: 18.04.2017
(51) Int. Cl.: G06F 17/30

(54) **ENCODING PROCESSING PROGRAM, ENCODING PROCESSING DEVICE, ENCODING PROCESSING METHOD, DECODING PROCESSING PROGRAM, DECODING PROCESSING DEVICE, AND DECODING PROCESSING METHOD**

(30) Priority: 18.04.2016 JP 2016083167
(71) Applicant: Fujitsu Limited, Kawasaki-shi, Kanagawa 211-8588 (JP)
(72) Inventor: Abe, Hazuki, Kanagawa, 211-8588 (JP); Kataoka, Masahiro, Kanagawa, 211-8588 (JP)
(74) Representative: Hoffmann Eitle

(57) **Abstract**

An information processing device (1) includes: an extractor (21) configured to extract processing target column information on processing target columns based on a processing instruction for a plurality of encoded tables, each of the plurality of encoded tables including a plurality of encoded column data, each of the plurality of encoded column data encoded from corresponding column data, respectively, that is delimited by a delimiter; and a generator (22) configured to generate a partial encoded table including the processing target columns from the plurality of encoded tables, using the processing target column information.

## Description

### FIELD

The embodiments discussed herein are related to, for example, an encoding processing program and a decoding processing program.

### BACKGROUND

In a process of Extract, Transform, Load (ETL), data present in a plurality of tables is referred to. For example, a dedicated ETL tool refers to target data from a plurality of tables. The data in each of the tables is written in a versatile file in, for example, a comma-separated values (CSV) format. The data in the CSV format is delimited by a delimiter. A comma (,) is cited as an example of the e delimiter.

ZIP using LZ77 is mainly used as a compression algorithm for the file written in the CSV format. The ZIP uses a sliding window for a character string to be compressed to determine a longest matching character string, and generates compressed data. The determination of the longest matching character string using the sliding window is performed on a byte-by-byte basis. Related techniques are disclosed in, for example, Japanese Laid-open Patent Publication No. 2000-101442 and Japanese Laid-open Patent Publication No. 2015-75970.

However, when the data is referred to from the compressed file obtained by compressing the CSV-formatted data delimited by the delimiter, there is a problem in that the data of the compressed file needs to be decoded from the top thereof.

For example, in the ZIP compression processing, the sliding window is used to determine the longest matching character string, and as a result, a compression code generated from the longest matching character string results in a code generated without regard to the data delimiter. That is, the compression code generated from the longest matching character string results in a code obtained by compressing the data continuing across the delimiter. In short, no commonality is present between the compression processing and the data reference processing. Consequently, to refer to the data from the compressed file obtained by compressing the CSV-formatted data delimited by the delimiter, the target compressed file needs to be decoded from the top thereof by restoring the longest matching character string from the data of the target compressed file, using the sliding window.

The problem described above occurs not only in the ETL processing, but also in the case of referring to the data from the compressed file obtained by compressing the CSV-formatted data delimited by the delimiter, in the same manner.

Accordingly, it is an object in one aspect of an embodiment of the invention to, for example, refer to, copy, or replace data in an encoded file obtained by encoding CSV-formatted data delimited by a delimiter, without decoding the data. It is an object of another aspect of the present invention to decode only data that needs to be referred to from the encoded file obtained by encoding the CSV-formatted data delimited by the delimiter, without collectively decoding the data from the top thereof.

### SUMMARY

According to an aspect of the embodiments, an encoding processing program causes a computer to execute a process including: extracting processing target column information on processing target columns based on a processing instruction for a plurality of encoded tables, each of the plurality of encoded tables including a plurality of encoded column data, each of the plurality of encoded column data encoded from corresponding column data, respectively, that is delimited by a delimiter; and generating a partial encoded table including the processing target columns from the plurality of encoded tables, using the processing target column information.

### BRIEF DESCRIPTION OF DRAWINGS

FIG. 1 is a diagram illustrating an example of encoding and decoding processing according to a first embodiment of the present invention;
FIG. 2 is a functional block diagram illustrating the configuration of an information processing device according to the first embodiment;
FIG. 3 is a diagram illustrating an exemplary table definition according to the first embodiment;
FIG. 4 is a diagram illustrating an example of a static dictionary and a dynamic dictionary according to the first embodiment;
FIG. 5 is a diagram illustrating an exemplary automaton for partial decoding;
FIG. 6 is a diagram illustrating an exemplary flow of the encoding and decoding processing according to the first embodiment;
FIG. 7A is a flowchart (1) illustrating the procedure of the encoding processing according to the first embodiment;
FIG. 7B is a flowchart (2) illustrating the procedure of the encoding processing according to the first embodiment;
FIG. 8 is a flowchart illustrating the procedure of the decoding processing according to the first embodiment;
FIG. 9 is a functional block diagram illustrating the configuration of an information processing device according to a second embodiment of the present invention;
FIG. 10 is a diagram illustrating an example of registration of a title item in the dynamic dictionary;
FIG. 11 is a diagram illustrating an example of second extraction processing according to the second embodiment;
FIG. 12 is a diagram illustrating an exemplary flow of encoding and ETL processing according to the second embodiment;
FIG. 13 is a flowchart illustrating the procedure of the encoding processing according to the second embodiment;
FIG. 14 is a flowchart illustrating the procedure of the ETL processing according to the second embodiment;
FIG. 15 is a diagram illustrating an exemplary hardware configuration of a computer;
FIG. 16 is a diagram illustrating an exemplary configuration of a computer program that operates on the computer; and
FIG. 17 is a diagram illustrating an exemplary configuration of devices in a system according to the embodiments.

### DESCRIPTION OF EMBODIMENTS

Preferred embodiments will be explained with reference to accompanying drawings. The embodiments do not limit the invention.

### [a] First Embodiment

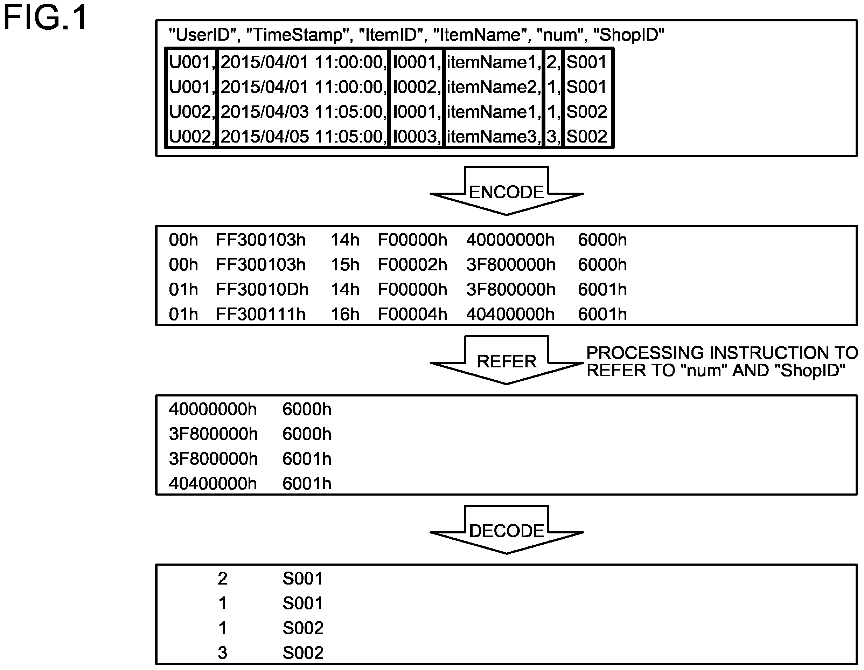

FIG. 1 is a diagram illustrating an example of encoding and decoding processing according to a first embodiment of the present invention.

As illustrated in FIG. 1, the encoding processing encodes data in a table represented by columns of each record delimited by a comma (,), on a column-by-column basis.

The term "table", as used herein, refers to a table used in, for example, a relational database (RDB), and is formed in a CSV format. Respective pieces of data obtained by delimiting each record with a comma are associated with respective items (fields). The respective items correspond to titles of respective table columns, and correspond to the respective columns of the record. In a definition (table definition) of the table described above, each of the items is associated with an encoding method used to encode the data of the item. Based on the encoding method for each of the items in the table set in the table definition, the encoding processing encodes the data represented by item. a comma is an example of a delimiter.

The following describes exemplary encoding methods. An encoding method using a static dictionary is applied to an item having a high appearance frequency. A primary key and an external reference key are cited as examples of the item having a high appearance frequency. The term "static dictionary" generally refers to a dictionary that identifies the appearance frequencies of words appearing in a document based on, for example, an English dictionary, a Japanese dictionary, or a textbook, and that assigns a shorter code to a word having a higher appearance frequency. The term "static dictionary", as used herein, refers to a dictionary that assigns a shorter code to the item value of an item having a higher appearance frequency. Codes (static codes) corresponding to the respective item values are registered in advance in the static dictionary. In contrast, an encoding method using a dynamic dictionary is applied to an item having a low appearance frequency. The term "dynamic dictionary" refers to a dictionary that associates an item value not registered in the static dictionary with a dynamic code (code) that is dynamically assigned. Title items, such as keys different from the primary keys and the external reference keys, that is, for example, a time stamp and an address are cited as examples of the item value not registered in the static dictionary. Each time an item value appears, the item value is registered in the dynamic dictionary in association with the dynamic code. In addition, an encoding method using a numerical binary number conversion is applied to an item representing a numerical value. The encoding methods described above are merely examples, and the present invention is not limited thereto.

As an example, a column having an item name of "UserID" is numbered 0; a column having an item name of "TimeStamp" is numbered 1; a column having an item name of "ItemID" is numbered 2; a column having an item name of "ItemName" is numbered 3; a column having an item name of "num" is numbered 4; and a column having an item name of "ShopID" is numbered 5. In the first record, data of "U001" is set in the 0th column; data of "2015/04/01 11:00:00" is set in the 1st column; data of "I0001" is set in the 2nd column; data of "itemName1" is set in the 3rd column; data of "2" is set in the 4th column; and data of "S001" is set in the 5th column.

The encoding processing encodes the data "U001" of "UserID" based on the encoding method of "UserID". As a result, "U001" is encoded into "00h". The encoding processing encodes the data "2015/04/01 11:00:00" of "TimeStamp" based on the encoding method of "TimeStamp". As a result, "2015/04/01 11:00:00" is encoded into "FF300103h". The encoding processing encodes the data "I0001" of "ItemID" based on the encoding method of "ItemID". As a result, "I0001" is encoded into "14h". The encoding processing encodes the data "itemName1" of "ItemName" based on the encoding method of "ItemName". As a result, "itemName1" is encoded into "F00000h". The encoding processing encodes the data "2" of "num" based on the encoding method of "num". As a result, "2" is encoded into "40000000h". The encoding processing encodes the data "S001" of "ShopID" based on the encoding method of "ShopID". As a result, "S001" is encoded into "6000h".

After a processing instruction for processing the encoded table is received, the decoding processing extracts processing target column information on processing target columns based on the received processing instruction. For example, assume that the processing instruction is an instruction to refer to the data of "num" and "ShopID" as item names of the table. In that case, the decoding processing extracts respective pieces of the column information associated with "num" and "ShopID" representing the item names of the processing target columns. As an example, the column information on "num" includes "4" as a column, and the column information associated with "ShopID" includes "5" as a column.

The decoding processing uses the extracted processing target column information to generate a partial encoded table corresponding to the processing target columns from the encoded table. For example, the decoding processing uses the processing target column information on "num" to acquire the column "4" for "num", and extracts the encoded data corresponding to the column "4". The decoding processing writes the extracted encoded data into the partial encoded table. The decoding processing uses the processing target column information on "ShopID" to acquire the column "5" for "ShopID", and extracts the encoded data corresponding to the column "5". The decoding processing writes the extracted encoded data into the partial encoded table. As an example, the encoded data "400000000h 3f800000h ..." in the column "4" is written into the first column of the partial encoded table, and the encoded data "6000h 6000h ..." in the column "5" is written into the second column of the partial encoded table.

After a processing instruction for decoding is received, the decoding processing decodes the encoded data in the partial encoded table thus generated. That is, the decoding processing partially decodes the encoded data that has been extracted according to the processing instruction for processing the encoded table. For example, the decoding processing decodes the encoded data of "num" based on a decoding method of "num", and decodes the encoded data of "ShopID" based on a decoding method of "ShopID". As an example, "2 1 1 3" is output as decoded data of "num", and "S001 S001 S002 S002" is output as decoded data of "ShopID".

In this manner, the encoding and decoding processing enables the reference of data from the encoded table in which the data in the table delimited by a comma is encoded, without performing the decoding processing. The encoding and decoding processing can decode only data that needs to be referred to, without collectively decoding the data from the top thereof.

### Configuration of Information Processing Device According to First Embodiment

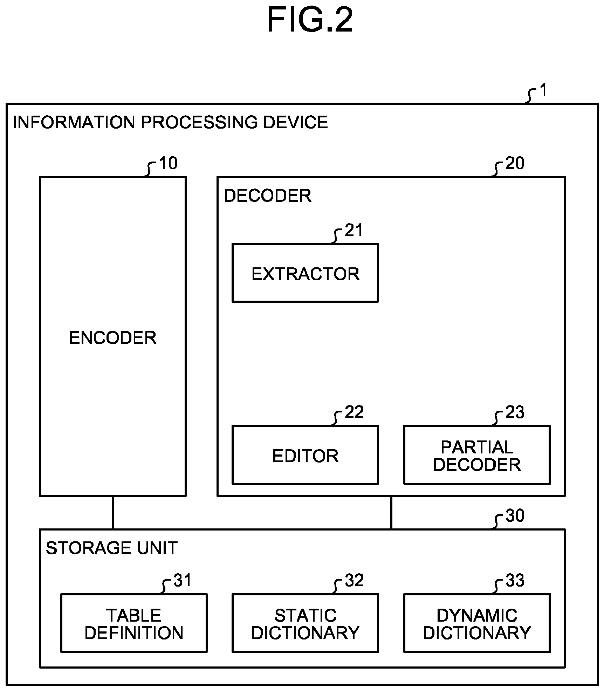

With reference to FIG. 2, the following describes the configuration of an information processing device 1 that performs the encoding and decoding processing according to the first embodiment. FIG. 2 is a functional block diagram illustrating the configuration of the information processing device according to the first embodiment. As illustrated in FIG. 2, the information processing device 1 includes an encoder 10, a decoder 20, and a storage unit 30.

A controller (not illustrated) including the encoder 10 and the decoder 20 is a processor that performs the encoding and decoding processing illustrated in FIG. 1. The controller includes an internal memory for storing therein computer programs defining various processing procedures and control data, and executes various types of processing using these computer programs and data. The controller corresponds to, for example, an electronic circuit of an integrated circuit, such as an application-specific integrated circuit (ASIC) or a field-programmable gate array (FPGA). The controller alternatively corresponds to an electronic circuit, such as a central processing unit (CPU) or a microprocessor unit (MPU).

The storage unit 30 corresponds to a storage device, including, for example, a nonvolatile semiconductor memory device such as a flash memory or a ferroelectric random access memory (FRAM (registered trademark)). The storage unit 30 includes a table definition 31, a static dictionary 32, and a dynamic dictionary 33.

The table definition 31 defines a correspondence between a column and an encoding method for each item constituting a table. The table definition 31 defines the correspondences for a plurality of such tables. The static dictionary 32 refers to a dictionary that assigns a shorter code to the item value of an item having a higher appearance frequency. The dynamic dictionary 33 is a dictionary that associates an item value not registered in the static dictionary with a dynamic code (code) that is dynamically assigned. The details of the table definition 31, the static dictionary 32, and the dynamic dictionary 33 will be described later.

### Example of Table Definition

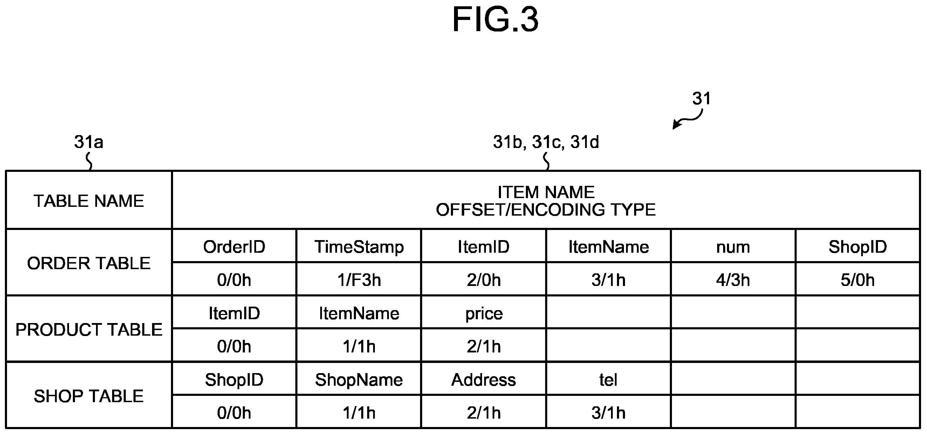

The following describes an example of the table definition 31, with reference to FIG. 3. FIG. 3 is a diagram illustrating the example of the table definition according to the first embodiment. As illustrated in FIG. 3, the table definition 31 stores therein an offset and an encoding type for each table name 31a and each item name 31b in association with each other. The offset is represented by reference numeral 31c. The encoding type is represented by reference numeral 31d. The table name 31a represents the name of a table. The item name 31b represents the name of an item constituting the table. The offset 31c represents information on the position in the table of the item constituting the table. That is, the offset 31c corresponds to a column. The encoding type 31d represents a type corresponding to an encoding method. As an example, a value "0h" of the encoding type 31d represents that an encoding method that uses the static dictionary 32 for encoding is employed. A value "1h" of the encoding type 31d represents that an encoding method that uses the dynamic dictionary 33 for encoding is employed. A value "2h" of the encoding type 31d represents that an int type numerical binary number conversion is used for encoding. A value "3h" of the encoding type 31d represents that a float type numerical binary number conversion is used for encoding. A value "4h" of the encoding type 31d represents that a double type numerical binary number conversion is used for encoding. A value "F0h" or larger of the encoding type 31d represents that an encoding method for encoding title items that uses the dynamic dictionary 33 for encoding is employed.

As an example, a case will be described where the table name 31a is "Order table". In the case of the item name 31b of "OrderID", the table definition 31 stores therein "0" as the offset 31c and "0h" as the encoding type 31d. That is, "OrderID" represents that the column is 0, and that the encoding method that uses the static dictionary 32 for encoding is employed. In the case of the item name 31b of "TimeStamp", the table definition 31 stores therein "1" as the offset 31c and "F3h" as the encoding type 31d. That is, "TimeStamp" represents that the column is 1, and that the encoding method for encoding title items that uses the dynamic dictionary 33 for encoding is employed. In the case of the item name 31b of "ItemName", the table definition 31 stores therein "3" as the offset 31c and "1h" as the encoding type 31d. That is, "ItemName" represents that the column is 3, and that the encoding method that uses the dynamic dictionary 33 for encoding is employed. In the case of the item name 31b of "num", the table definition 31 stores therein "4" as the offset 31c and "3h" as the encoding type 31d. That is, "num" represents that the column is 4, and that the encoding method that uses the float type numerical binary number conversion for encoding is employed.

Referring back to FIG. 2, the encoder 10 encodes data in a table represented by columns delimited by a comma, column by column for each record. For example, the encoder 10 reads out a table to be encoded. The encoder 10 selects a character string delimited by a comma as a processing target. The encoder 10 reads out the processing target column information on the item (column) corresponding to the selected character string from the table definition 31. The encoder 10 encodes the selected character string based on the encoding type 31d included in the read-out processing target column information. The encoder 10 writes the encoded code into an encoded buffer. After encoding the entire data, the encoder 10 writes the encoded buffer into the encoded table.

The decoder 20 includes an extractor 21, an editor 22, and a partial decoder 23.

Based on the processing instruction for processing the encoded table, the extractor 21 extracts the processing target column information on the processing target columns, and uses the extracted processing target column information to extract data of the processing target columns from the encoded table. For example, the extractor 21 acquires table names and item names of reference items, grouping items, and condition items from the processing instruction. The extractor 21 extracts, from the table definition 31, the processing target column information on items included in the processing instruction among the reference items, the grouping items, and the condition items thus acquired, for each table having an acquired table name. The extractor 21 uses the offsets 31c of the processing target column information on target items to extract item values of the target items from the encoded table for each table, on a record-by-record basis. The extractor 21 writes the item values extracted from the encoded table into an encoded file, on a record-by-record basis. If a plurality of such table names are acquired, the encoded file is generated for each encoded table corresponding to each of the table names.

The editor 22 edits the data (item values) of the processing target columns extracted by the extractor 21 in accordance with the processing instruction. For example, if the processing instruction is an instruction to refer to data of a reference item meeting extracting/joining conditions using a condition item, the editor 22 extracts the item value of the reference item meeting the extracting/joining conditions from the item values of the processing target items extracted by the extractor 21. The joining condition refers to, as an example, a condition (join ... on ...) for joining a plurality of tables using the condition items of the respective tables. The extracting condition refers to, as an example, a condition (where ...) for extracting the reference item using the condition item. The editor 22 stores the extracted item values in a partial encoded file. In addition, if the processing instruction includes a grouping item, the editor 22 causes the partial decoder 23 (to be described later) to decode the item value of the reference item related to the grouping extracted by the extractor 21. The editor 22 joins the encoded files according to the joining condition, and performs grouping according to a grouping condition. The term "grouping condition", as used herein, refers to a condition used when the grouping is performed, and is a condition (group by ...) for the grouping using the condition item. The editor 22 encodes the group value, and stores the encoded group value together with the item values of the other reference items in the partial encoded file. The encoding processing only needs to be performed with the same method as that of the encoder 10.

The partial decoder 23 decodes only the item value of a requested item. That is, the partial decoder 23 partially decodes only the item value of the requested item among item values of the items in the encoded table. For example, after receiving a request from the editor 22 to partially decode the item value of an item related to the grouping, the partial decoder 23 reads out the processing target column information on the item (column) from the table definition 31. The partial decoder 23 decodes the item value of the requested item based on the encoding type 31d included in the read-out processing target column information. As an example, if the encoding type 31d is in the range from 2h to 4h, the partial decoder 23 determines that the encoding type is the numerical binary number conversion, and decodes the item value representing a numerical binary number into a character string. If the encoding type 31d represents an encoding method other than the numerical binary number conversion, the partial decoder 23 only needs to use an automaton for partial decoding to decode the item value into the character string. The automaton for partial decoding will be described later.

### Example of Static Dictionary and Dynamic Dictionary

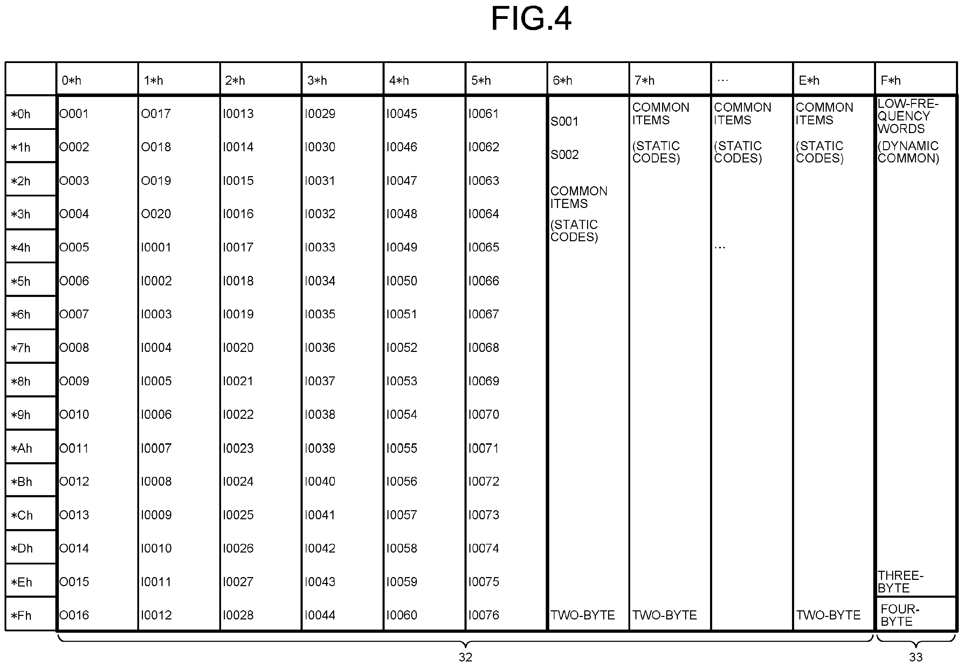

The following describes an example of the static dictionary 32 and the dynamic dictionary 33 according to the first embodiment, with reference to FIG. 4. FIG. 4 is a diagram illustrating an example of the static dictionary and the dynamic dictionary according to the first embodiment.

As illustrated in FIG. 4, in the static dictionary 32, character strings are mapped to one-byte or two-byte codes according to the appearance frequency. 00h to 5Fh are one-byte codes. 6000h to EFFFh are two-byte codes. In the dynamic dictionary 33, character strings that are not registered in the static dictionary 32 and do not represent numerical values are mapped to three-byte or four-byte codes. F00000h to FEFFFFh are three-byte codes. FF000000h to FFFFFFFFh are four-byte codes. The one-byte codes and the two-byte codes are mapped in the example of FIG. 4.

In the example of FIG. 4, character strings for the primary keys and the external reference keys are mapped to one-byte codes. As an example, regarding the item "OrderID" serving as a primary key, a character string "O001" is mapped to a one-byte value "00h", and a character string "O020" is mapped to a one-byte value "13h". Regarding the item "ItemID" serving as an external reference key, a character string "I0001" is mapped to a one-byte value "14h", and a character string "I0076" is mapped to a one-byte value "5Fh". Regarding the item "ShopID" serving as an external reference key, a character string "S001" is mapped to a two-byte value "6000h".

Regarding the item "ItemName", a character string "itemName1" is mapped to a three-byte value "F00000h" according to the encoding type 31d of this item when the item is encoded, and a character string "itemName2" is mapped to a three-byte value "F00002h" according to the encoding type 31d of this item when the item is encoded. Regarding the title item "TimeStamp", a character string "2015/04/01 11:00:00" is mapped to a four-byte value "FF300103h" according to the encoding type 31d of this item when the item is encoded, and a character string "2015/04/01 11:01:00" is mapped to a four-byte value "FF300113h" according to the encoding type 31d of this item when the item is encoded.

### Example of Automaton Regarding Partial Decoding

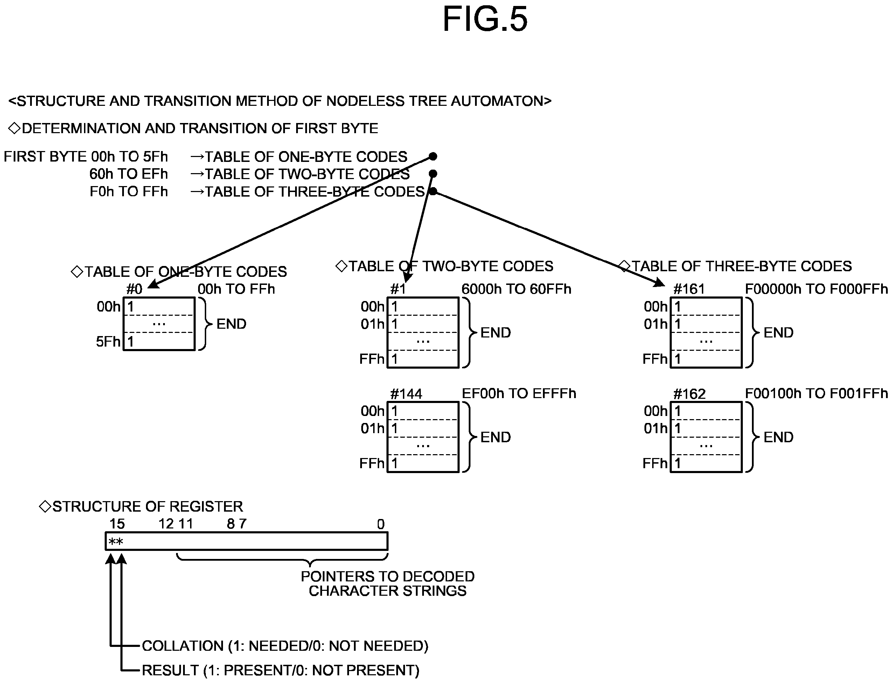

The following describes an example of an automaton for partial decoding, with reference to FIG. 5. FIG. 5 is a diagram illustrating the example of the automaton for partial decoding. As illustrated in FIG. 5, the automaton for partial decoding includes a table of one-byte codes, a table of two-byte codes, and a table of three-byte codes. Each of the tables has a two-byte register for decoding for each code. The register includes a collation flag and a result flag. The collation flag is located at the 15th bit of this information, and indicates whether collation is needed. The collation flag is set to "1" if collation is needed, or set to "0" if collation is not needed. The result flag is located at the 14th bit of this information, and indicates whether a decoding result is present. The result flag is set to "1" if a decoding result is present, or set to "0" if no decoding result is present. If a decoding result is present, a pointer to a decoded character string representing a position where the decoding result lies is set. Absence of the decoding result indicates that no pointer is set to any decoded character string.

As an example, to decode "00h", the partial decoder 23 uses the automaton for partial decoding to acquire a register corresponding to "00h". That is, since the first byte is in the range from 00h to 5Fh, the partial decoder 23 acquires the register corresponding to "00h" with reference to the table of one-byte codes. The partial decoder 23 acquires a character string "O001" representing a decoding result, with reference to the collation flag, the result flag, and the pointer to the decoded character string.

As another example, to decode "6001h", the partial decoder 23 uses the automaton for partial decoding to acquire a register corresponding to "6001h". That is, since the first byte is in the range from 60h to EFh, the partial decoder 23 acquires the register corresponding to "6001h" with reference to the table of two-byte codes. The partial decoder 23 acquires a character string "S002" representing a decoding result, with reference to the collation flag, the result flag, and the pointer to the decoded character string.

### Example of Flow of Encoding and Decoding Processing

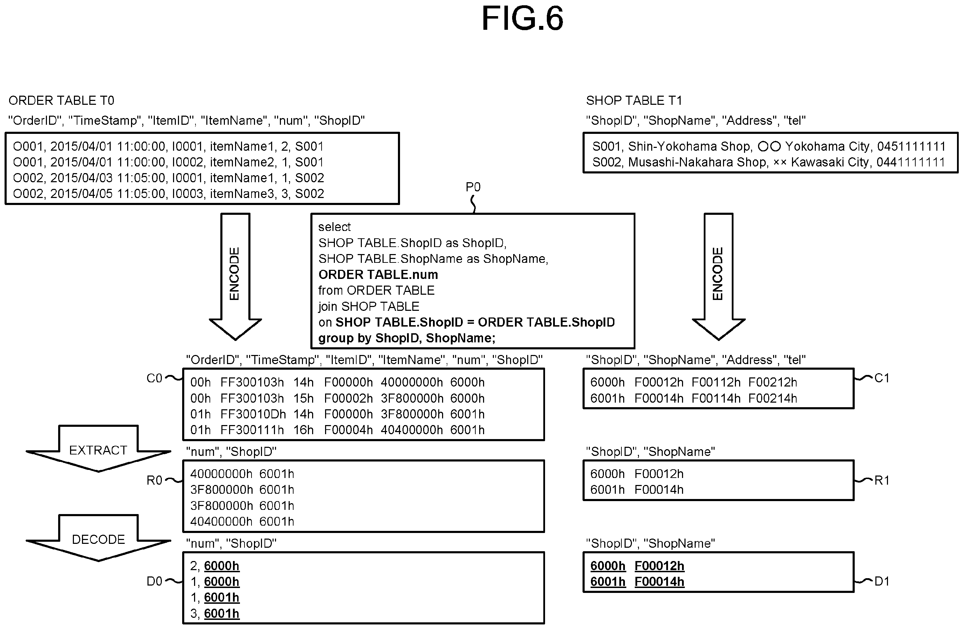

With reference to FIG. 6, the following describes an example of a flow of the encoding and decoding processing according to the first embodiment. FIG. 6 is a diagram illustrating the example of the flow of the encoding and decoding processing according to the first embodiment. In FIG. 6, the table definition 31 illustrated in FIG. 3 is used. In FIG. 6, the static dictionary 32 illustrated in FIG. 4 is used.

As illustrated in FIG. 6, the encoder 10 encodes data in an order table T0 delimited by a comma, column by column for each record. For example, the encoder 10 reads out the order table T0 to be encoded. The encoder 10 selects a character string in the read-out order table T0 delimited by a comma as a processing target. The encoder 10 reads out the processing target column information on the item (column) corresponding to the processing target from the table definition 31. The encoder 10 encodes the selected character string based on the encoding type 31d included in the read-out processing target column information.

In this case, a character string "O001" is selected as the processing target from the first record. Then, the encoder 10 reads out the processing target column information "0/0h" on the item "OrderID" corresponding to the processing target, from the table definition 31. The processing target column information indicates that the encoding type 31d is 0x0. Hence, the encoder 10 uses the static dictionary 32 to encode the processing target. As a result, the character string "O001" is encoded into "00h".

A character string "2015/04/01 11:00:00" is selected as the processing target. Then, the encoder 10 reads out the processing target column information "1/F3h" on the item "TimeStamp" corresponding to the processing target, from the table definition 31. The processing target column information indicates that the encoding type 31d is F3h, which is not smaller than 0xF0. Hence, the encoder 10 determines that a title item is to be encoded, and uses the dynamic dictionary 33 to encode the processing target. As a result, assuming that a code "FF300103h" is not mapped among codes beginning from "FF300000h", the character string "2015/04/01 11:00:00" is encoded into "FF300103h".

A character string "I0001" is selected as the processing target. Then, the encoder 10 reads out the processing target column information "2/0h" on the item "ItemID" corresponding to the processing target, from the table definition 31. The processing target column information indicates that the encoding type 31d is 0h. Hence, the encoder 10 uses the static dictionary 32 to encode the processing target. As a result, the character string "I0001" is encoded into "14h".

A character string "itemName1" is selected as the processing target. Then, the encoder 10 reads out the processing target column information "3/0x1" on the item "itemName1" corresponding to the processing target, from the table definition 31. The processing target column information indicates that the encoding type 31d is 1h. Hence, the encoder 10 uses the dynamic dictionary 33 to encode the processing target. As a result, assuming that a code "F00000h" is not mapped among codes beginning from "F00000h", the character string "itemName1" is encoded into "F00000h".

A character string "2" is selected as the processing target. Then, the encoder 10 reads out the processing target column information "4/3h" on the item "num" corresponding to the processing target, from the table definition 31. The processing target column information indicates that the encoding type 31d is 0x3. Hence, the encoder 10 uses the float type numerical binary number conversion to encode the processing target. As a result, the character string "2" is encoded into "40000000h".

A character string "S001" is selected as the processing target. Then, the encoder 10 reads out the processing target column information "5/0h" on the item "ShopID" corresponding to the processing target, from the table definition 31. The processing target column information indicates that the encoding type 31d is 0x0. Hence, the encoder 10 uses the static dictionary 32 to encode the processing target. As a result, the character string "S001" is encoded into "6000h".

The second and subsequent records of the order table are also encoded. As a result, the encoder 10 writes the encoded data into an encoded table C0.

The encoder 10 encodes data in a shop table T1 delimited by a comma, column by column for each record. The encoding method is the same as that used in the case of the order table T0, and hence, will not be described. As a result, the encoder 10 writes the encoded data into an encoded table C1.

Then, based on a processing instruction P0 for the encoded tables C0 and C1, the extractor 21 extracts the processing target column information on processing target columns, and uses the extracted processing target column information to extract data in the processing target columns from the encoded tables C0 and C1. The processing instruction represented by reference numeral P0 instructs to join the encoded table C0 of the order table T0 with the encoded table C1 of the shop table T1 according to ShopID. The processing instruction instructs to refer to ShopID and ShopName of the encoded table C1 and num of the encoded table C0 from the joined table. Further, num is grouped by using ShopID and ShopName as keys.

For example, the extractor 21 acquires the table names, and the item names of the reference items, the condition items, and the grouping items, from the processing instruction P0. In this case, the extractor 21 acquires, as the table names, those of the encoded table C0 of the order table T0 and the encoded table C1 of the shop table T1, from the processing instruction P0. The extractor 21 acquires ShopID and ShopName of the encoded table C1 and num of the encoded table C0 as the item names of the reference items, from the processing instruction P0. The extractor 21 acquires ShopID of the respective encoded tables C0 and C1 as the item names of the condition items, from the processing instruction P0. The extractor 21 acquires ShopID and ShopName as the item names of the grouping items, from the processing instruction P0.

The extractor 21 extracts, from the table definition 31, the processing target column information on items (columns) included in the processing instruction among the reference items, the grouping items, and the condition items thus acquired, for each table having one of the acquired table names. In this case, the processing target column information acquired as the reference items is 0/0h on ShopID of the encoded table C1, 1/1h on ShopName of the encoded table C1, and 4/3h on num of the encoded table C0. The processing target column information acquired as the condition items is 0/0h on ShopID of the encoded table C1 and 5/0h on ShopID of the encoded table C0. The processing target column information acquired as the grouping items is 0/0h and 1/1h on ShopID and ShopName, respectively, of the encoded table C1.

The extractor 21 extracts item values located at the offsets 31c included in the extracted processing target column information, from the encoded tables C0 and C1. In this case, the extractor 21 extracts, from the encoded table C0, item values located at the offsets 31c (4, 5) included in the extracted processing target column information on num and ShopID, respectively. As an example, the extractor 21 extracts "40000000h" as an item value of num and "6000h" as an item value of ShopID, from the first record, and extracts "3F800000h" as an item value of num and "6000h" as an item value of ShopID, from the second record. The extractor 21 writes the data extracted from the encoded table C0 into an encoded file R0.

Furthermore, the extractor 21 extracts, from the encoded table C1, item values located at the offsets 31c (0, 1) included in the extracted processing target column information on ShopID and ShopName, respectively. As an example, the extractor 21 extracts "6000h" as an item value of ShopID and "F00012h" as an item value of ShopName, from the first record, and extracts "6001h" as an item value of ShopID and "F00014h" as an item value of ShopName, from the second record. The extractor 21 writes the data extracted from the encoded table C1 into an encoded file R1.

Then, if the processing instruction P0 includes a grouping item, the editor 22 causes the partial decoder 23 to decode the item values of the reference item related to the grouping extracted by the extractor 21. In this case, since the processing instruction P0 includes the grouping items, the editor 22 causes the partial decoder 23 to decode the item values of the reference item num related to the grouping. The partial decoder 23 decodes only the item values of the reference item num based on the encoding type 31d (3h) included in the processing target column information 4/3h on the reference item num. In this case, the partial decoder 23 determines that 3h corresponds to the float type numerical binary number conversion, and decodes an item value representing a numerical binary number into a character string. As exemplary results, "40000000h" is decoded into a character string "2", and "3f800000h" is decoded into a character string "1". The editor 22 writes data including data obtained by partially decoding the encoded file R0 into an encoded file D0. The encoded file R1 is not partially decoded. Hence, the editor 22 directly writes the encoded file R1 into an encoded file D1.

Then, the editor 22 stores results of partial decoding together with the item values of the other reference items in the partial encoded file (not illustrated). In this case, the editor 22 groups the results obtained by partially decoding the item values of the reference item num related to the grouping according to the grouping condition (group by ShopID and ShopName), and encodes the group values. The editor 22 writes the encoded group values of num, together with the encoded item values of ShopID and ShopName, into the partial encoded file.

### Procedure of Encoding Processing

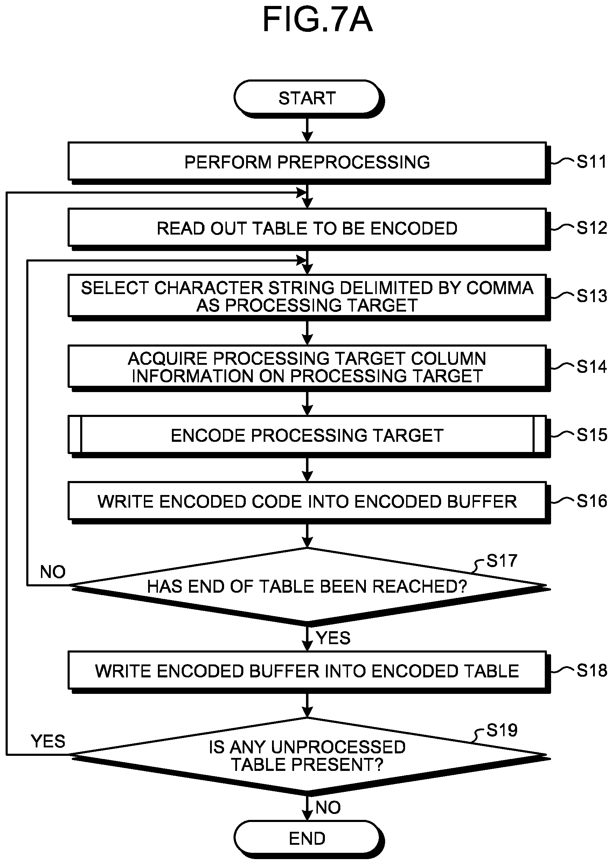

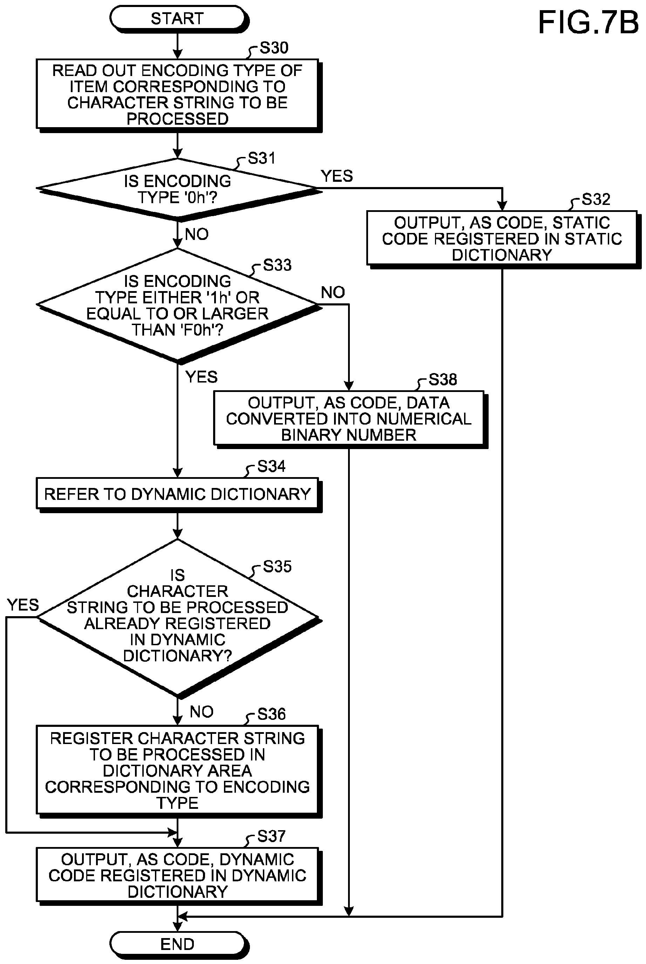

FIGS. 7A and 7B are flowcharts illustrating the procedure of the encoding processing according to the first embodiment.

As illustrated in FIG. 7A, the encoder 10 performs preprocessing (Step S11). For example, the encoder 10 allocates various storage areas in the storage unit 30. As an example, the encoder 10 allocates a storage area for the encoded buffer in the storage unit 30.

The encoder 10 reads out a table to be encoded (Step S12). The encoder 10 selects a character string delimited by a comma as a processing target from the read-out table (Step S13). The encoder 10 acquires the processing target column information on the selected processing target (Step S14).

The encoder 10 then encodes the processing target (Step S15). The procedure of the processing of encoding the processing target will be described with reference to FIG. 7B. The encoder 10 writes the encoded code into the encoded buffer (Step S16).

The encoder 10 determines whether the end of the table has been reached (Step S17). If the encoder 10 determines that the end of the table has not been reached (No at Step S17), the encoder 10 performs the processing at Step S13 to encode the next character string.

If the encoder 10 determines that the end of the table has been reached (Yes at Step S17), the encoder 10 writes the encoded buffer into an encoded table (Step S18). The encoder 10 determines whether any unprocessed table is present (Step S19). If the encoder 10 determines that an unprocessed table is present (Yes at Step S19), the encoder 10 performs the processing at Step S12 to read out the next table.

If the encoder 10 determines that there is no unprocessed table present (No at Step S19), the encoder 10 ends the encoding processing.

As illustrated in FIG. 7B, after receiving the character string to be processed, the encoder 10 reads out the encoding type 31d of an item corresponding to the character string to be processed from the table definition 31 (Step S30). The encoder 10 determines whether the encoding type 31d is '0h' (Step S31). As an example, '0h' corresponds to the encoding type 31d representing that the encoding method using the static dictionary 32 for encoding is employed.

If the encoding type 31d is '0h' (Yes at Step S31), the encoder 10 outputs, as a code, a static code registered in the static dictionary 32 (Step S32). The encoder 10 ends the processing of encoding the processing target.

If the encoding type 31d is not '0h' (No at Step S31), the encoder 10 determines whether the encoding type 31d is either '1h' or equal to or larger than 'F0h' (Step S33). As an example, '1h' corresponds to the encoding type 31d representing that the encoding method using the dynamic dictionary 33 for encoding is employed, and 'F0h' corresponds to the encoding type 31d representing that the encoding method for encoding title items that uses the dynamic dictionary 33 for encoding is employed.

If the encoding type 31d is either '1h' or equal to or larger than 'F0h' (Yes at Step S33), the encoder 10 refers to the dynamic dictionary 33 (Step S34). The encoder 10 determines whether the character string to be processed is already registered in the dynamic dictionary 33 (Step S35). If the encoder 10 determines that the character string to be processed is already registered in the dynamic dictionary 33 (Yes at Step S35), the encoder 10 proceeds the processing to Step S37 to assign a dynamic code to the character string to be processed.

If the encoder 10 determines that the character string to be processed has not been registered in the dynamic dictionary 33 (No at Step S35), the encoder 10 registers the character string to be processed in a dictionary area corresponding to the encoding type 31d (Step S36). The encoder 10 performs the processing at Step S37 to assign a dynamic code to the character string to be processed.

At Step S37, the encoder 10 outputs, as a code, the dynamic code registered in the dynamic dictionary 33 (Step S37). For example, the encoder 10 encodes the character string to be processed into the dynamic code that was associated with the character string to be processed when the character string to be processed was registered. The encoder 10 outputs the encoded dynamic code as a code. The encoder 10 ends the processing of encoding the processing target.

If, at Step S33, the encoding type 31d is determined to be neither '1h' nor equal to or larger than 'F0h' (No at Step S33), the encoder 10 outputs, as a code, data obtained by converting the character string to be processed into a numerical binary number (Step S38). That is, the encoder 10 determines that the encoding type 31d is the numerical binary number conversion. The encoder 10 ends the processing of encoding the processing target.

### Procedure of Decoding Processing

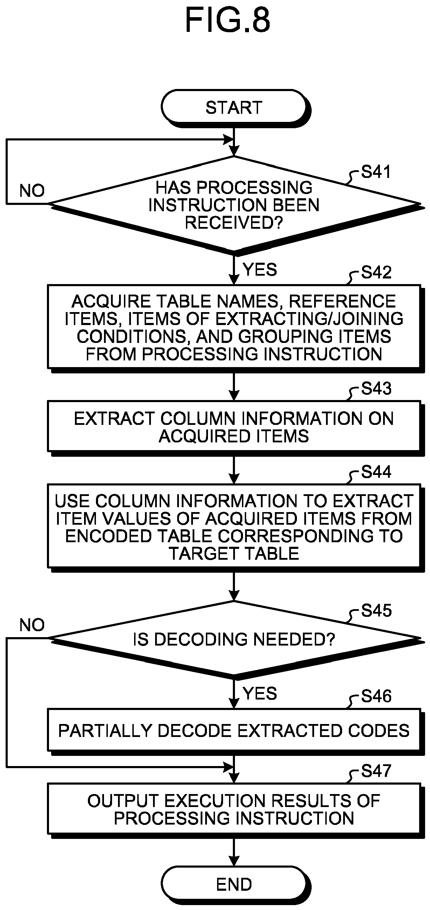

FIG. 8 is a flowchart illustrating the procedure of the decoding processing according to the first embodiment.

As illustrated in FIG. 8, the decoder 20 determines whether a processing instruction for processing the encoded table has been received (Step S41). If the decoder 20 determines that a processing instruction for processing the encoded table has not been received (No at Step S41), the decoder 20 repeats the determination processing until the processing instruction is received.

If the processing instruction has been received (Yes at Step S41), the decoder 20 acquires table names, reference items, items of extracting/joining conditions, and grouping items from the processing instruction (Step S42) .

The decoder 20 extracts column information on the acquired items from the table definition 31 (Step S43). For example, the decoder 20 extracts, from the table definition 31, the processing target column information on the reference items, the items of extracting/joining conditions, and the grouping items that have been acquired, for each table having one of the acquired table names.

The decoder 20 uses the column information on the acquired items to extract item values of the acquired items from the encoded table serving as a target table (Step S44). For example, the decoder 20 extracts, from an encoded file for each table, item values located at the offsets 31c included in the extracted processing target column information.

The decoder 20 then determines whether decoding is needed (Step S45). If the decoder 20 determines that decoding is not needed (No at Step S45), the decoder 20 proceeds the processing to Step S47.

If the decoder 20 determines that decoding is needed (Yes at Step S45), the decoder 20 partially decodes the codes of reference items related to grouping (Step S46). For example, based on the encoding types 31d included in the processing target column information on the reference items, the decoder 20 decodes the codes of the reference items. The decoder 20 proceeds the processing to Step S47.

At Step S47, the decoder 20 outputs the execution results of the processing instruction (Step S47). For example, the decoder 20 writes the grouping result together with the codes of the other reference items into the partial encoded file.

### Effects of First Embodiment

In this manner, in the first embodiment described above, based on the processing instruction for processing the encoded tables in each of which data in a table delimited by the delimiter is encoded column by column for each record, the information processing device 1 extracts the processing target column information on the processing target columns. The information processing device 1 uses the processing target column information to generate the partial encoded table corresponding to the processing target columns from the encoded tables. With this configuration, the information processing device 1 can refer to data from the encoded table obtained by encoding the data in the table delimited by a comma, without performing the decoding processing.

In the first embodiment described above, the information processing device 1 uses the processing target column information to extract the encoded data corresponding to the processing target columns from each of the encoded tables, and partially decodes the encoded data meeting conditions of the processing instruction. With this configuration, the information processing device 1 can partially decode the data meeting the conditions.

### [b] Second Embodiment

The information processing device 1 according to the first embodiment extracts the processing target column information on the processing target columns based on the processing instruction for processing the encoded tables, and uses the extracted processing target column information to extract data in the processing target columns from the encoded tables. The information processing device 1 is, however, not limited to this approach. If the extracting condition of the processing instruction is a condition representing a range specification, the information processing device 1 may use the extracted processing target column information to extract data in the processing target columns meeting the extracting condition from the encoded tables. The title items are cited as examples of the items specified by the extracting condition representing the range specification.

The information processing device 1 according to a second embodiment of the present invention extracts the processing target column information on the processing target columns based on the processing instruction for processing the encoded tables. The following describes a case where the information processing device 1 uses the extracted processing target column information to extract, from the encoded tables, the data in the processing target columns meeting the extracting condition of the processing instruction specifying a range.

### Configuration of Information Processing Device According to Second Embodiment

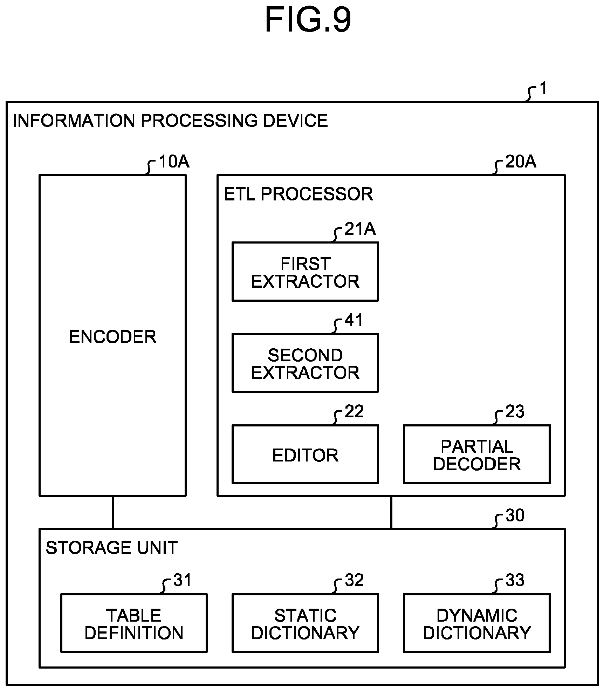

FIG. 9 is a functional block diagram illustrating the configuration of the information processing device according to the second embodiment. The same components as those of the information processing device 1 illustrated in FIG. 2 are assigned with the same reference numerals, and the duplicate components and operations thereof will not be described. The second embodiment differs from the first embodiment in that the encoder 10 is replaced with an encoder 10A, and the decoder 20 is replaced with an ETL processor 20A that performs ETL processing. The second embodiment also differs from the first embodiment in that the extractor 21 is replaced with a first extractor 21A, and a second extractor 41 is added. The first extractor 21A performs the same operation as the extractor 21.

If a title item is present in the table delimited by a comma, the encoder 10A sorts the records in the order of item values of the title item. The encoder 10A encodes the data in the table, column by column for each record. When the title item is present in the table, the record may be sorted either in ascending order or descending order of the item values. The second embodiment will be described assuming that the sorting is performed in ascending order. For example, the encoder 10A reads out a table to be encoded. The encoder 10A selects a character string delimited by a comma as a processing target. The encoder 10A reads out the processing target column information on the item (column) corresponding to the selected character string from the table definition 31. The encoder 10A encodes the selected character string based on the encoding type 31d included in the read-out processing target column information.

The first extractor 21A performs the same operation as the extractor 21 according to the first embodiment, and hence will not be described.

Based on the extracting condition serving as a condition representing the range specification, the second extractor 41 extracts records that meet the extracting condition from records extracted by the first extractor 21A.

As an example, if an item constituting the extracting condition is a title item, the second extractor 41 determines whether the item value of the item is already registered in the dynamic dictionary 33. If the item value of the item is already registered in the dynamic dictionary 33, the second extractor 41 replaces the item value of the item constituting the extracting condition with a dynamic code registered in the dynamic dictionary 33. The second extractor 41 uses the dynamic dictionary 33 to extract a record that meets the extracting condition. If the item value of the item is not registered in the dynamic dictionary 33, the second extractor 41 searches the dynamic dictionary 33 for a character string that meets the extracting condition and corresponds to a boundary of the range specification. The second extractor 41 replaces the item value of the item constituting the extracting condition with a dynamic code corresponding to the found character string. The second extractor 41 uses the dynamic dictionary 33 to extract a record that meets the extracting condition. Binary search, binary tree search, and B-tree search are cited as examples of the method for searching for the character string corresponding to the boundary of the range specification. That is, the second extractor 41 can extract the data without decoding the code of the item in the record included in the encoded file that constitutes the extracting condition.

As another example, if the item constituting the extracting condition is of a numeric type, the second extractor 41 converts the item value of the item into a numerical binary number. The second extractor 41 replaces the item value of the item constituting the extracting condition with the converted code, and extracts a record that meets the extracting condition. That is, the second extractor 41 can extract the data without decoding the code of the item in the record included in the encoded file that constitutes the extracting condition.

If the item constituting the extracting condition is not a title item, the second extractor 41 only needs to decode the code of the item in the record that constitutes the extracting condition, and then to extract the record that meets the extracting condition.

### Example of Registration of Title Item in Dynamic Dictionary

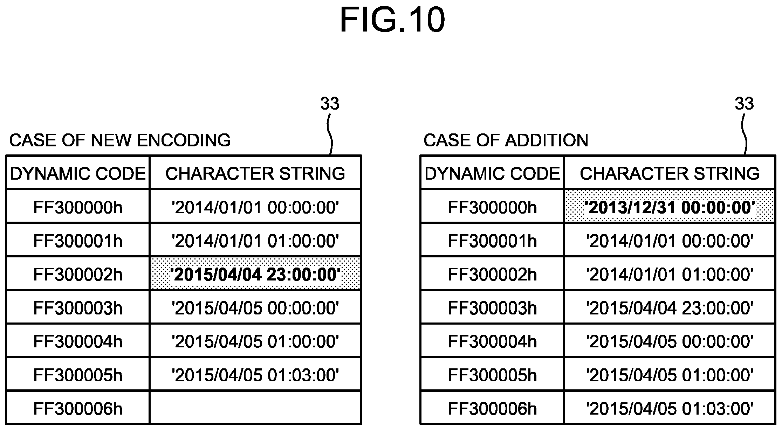

FIG. 10 is a diagram illustrating an example of registration of a title item in the dynamic dictionary. FIG. 10 assumes that the title item is "TimeStamp", and assumes a case where the encoding type 31d of the title item is F3h. In this case, the encoder 10A is assumed to assign dynamic codes beginning from a four-byte code "FF300000h".

Assume that the title item "TimeStamp" is present in a table delimited by a comma. In that case, the encoder 10A sorts the records in the table in the order of the item values of the title item. The encoder 10A encodes the data in the table, column by column for each record. In this case, the item values of "TimeStamp" are assumed to be sorted in the order of "2014/01/01 00:00:00", "2014/01/01 01:00:00", and "2015/04/04 23:00:00", and further sorted in the order of "2015/04/05 00:00:00", "2015/04/05 01:00:00", and "2015/04/05 01:03:00". The encoder 10A encodes the item values of "TimeStamp" in this order.

As illustrated in the left-hand part of FIG. 10, "2014/01/01 00:00:00" is assigned with a first value "FF300000h" as a dynamic code, and "2014/01/01 01:00:00" is assigned with the next value "FF300001h" as another dynamic code.

An item value "2013/12/31 00:00:00" that is unregistered in the dynamic dictionary 33 is assumed to be added thereto. In that case, the encoder 10A sorts the records in the table including the added item value in the order of the item values of the title item. The encoder 10A encodes the data in the table, column by column for each record. In this case, the item values of "TimeStamp" are sorted in the order of "2013/12/31 00:00:00", "2014/01/01 00:00:00", "2014/01/01 01:00:00", and "2015/04/04 23:00:00", and further sorted in the order of "2015/04/05 00:00:00", "2015/04/05 01:00:00", and "2015/04/05 01:03:00". The encoder 10A encodes the item values of "TimeStamp" in this order.

As illustrated in the right-hand part of FIG. 10, "2013/12/31 00:00:00" is assigned with a first value "FF300000h" as a dynamic code; "2014/01/01 00:00:00" is assigned with the next value "FF300001h" as another dynamic code; and "2014/01/01 01:00:00" is assigned with a value "FF300002h" after the next value, as still another dynamic code.

### Example of Second Extraction Processing

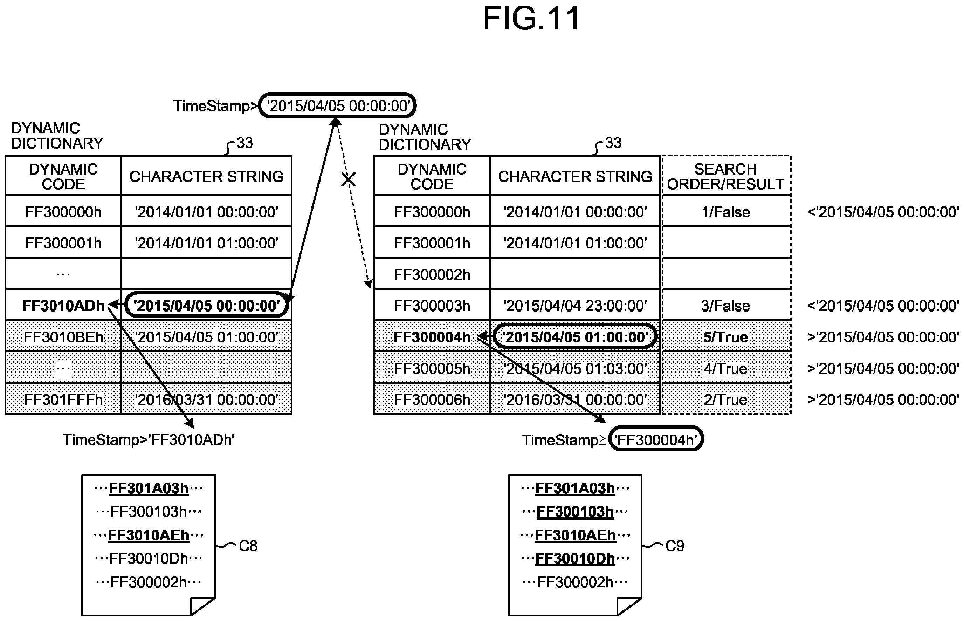

FIG. 11 is a diagram illustrating an example of second extraction processing according to the second embodiment. The extracting condition is assumed to be "TimeStamp > '2014/04/05 00:00:00'", as illustrated in FIG. 11. "TimeStamp" represents a title item.

As illustrated in the left-hand part of FIG. 11, since the item "TimeStamp" constituting the extracting condition represents a title item, the second extractor 41 determines whether the item value "2014/04/05 00:00:00" of the item is already registered in the dynamic dictionary 33. In this case, the item value "2014/04/05 00:00:00" of the item is already registered in the dynamic dictionary 33.

Hence, the second extractor 41 replaces the item value of the item constituting the extracting condition with a dynamic code registered in the dynamic dictionary 33. In this case, the second extractor 41 replaces the item value "2014/04/05 00:00:00" of the item constituting the extracting condition with the dynamic code "FF3010ADh" registered in the dynamic dictionary 33.

The second extractor 41 uses the dynamic dictionary 33 to extract records that meet the extracting condition. In this case, the second extractor 41 extracts records in each of which "TimeStamp" has a dynamic code higher than the dynamic code "FF3010ADh". Assuming that the encoded table is C8, the second extractor 41 extracts records that have "FF301A03h" and "FF3010AEh" as dynamic codes of "TimeStamp".

As illustrated in the right-hand part of FIG. 11, when the item "TimeStamp" constituting the extracting condition represents a title item, the second extractor 41 determines whether the item value "2014/04/05 00:00:00" of the item is already registered in the dynamic dictionary 33. In this case, the item value "2014/04/05 00:00:00" of the item is not registered in the dynamic dictionary 33.

Hence, the second extractor 41 searches the dynamic dictionary 33 for an item value (character string) that is a character string meeting the extracting condition and that corresponds to a boundary of the range specification. In this case, the binary search is used. As a result, the second extractor 41 determines that an item value corresponding to the first dynamic code "FF300000h" does not meet the extracting condition (False). The second extractor 41 then determines that an item value corresponding to the last dynamic code "FF300006h" meets the extracting condition (True). Then, the second extractor 41 searches for an item value corresponding to an intermediate dynamic code "FF300003h", and determines that the item value corresponding to this dynamic code does not meet the extracting condition (False). Moreover, the second extractor 41 searches for an item value corresponding to another intermediate dynamic code "FF300005h", and determines that the item value corresponding to this dynamic code meets the extracting condition (True). Furthermore, the second extractor 41 searches for an item value corresponding to still another intermediate dynamic code "FF300004h", and determines that the item value corresponding to this dynamic code meets the extracting condition (True).

If adjacent dynamic codes are determined to be False and True, the second extractor 41 replaces the item value of the item constituting the extracting condition with a dynamic code that is determined to be True. In this case, the second extractor 41 replaces the item value "2014/04/05 00:00:00" of the item constituting the extracting condition with the dynamic code "FF300004h" registered in the dynamic dictionary 33.

The second extractor 41 uses the dynamic dictionary 33 to extract records that meet the extracting condition. In this case, the second extractor 41 extracts records in each of which "TimeStamp" has a dynamic code equal to or higher than the dynamic code "FF300004h". Assuming that the encoded table is C9, the second extractor 41 extracts records that have "FF301A03h", "FF300103h, "FF3010AEh", and "FF30010Dh" as dynamic codes of "TimeStamp".

### Example of Flow of Encoding and ETL Processing

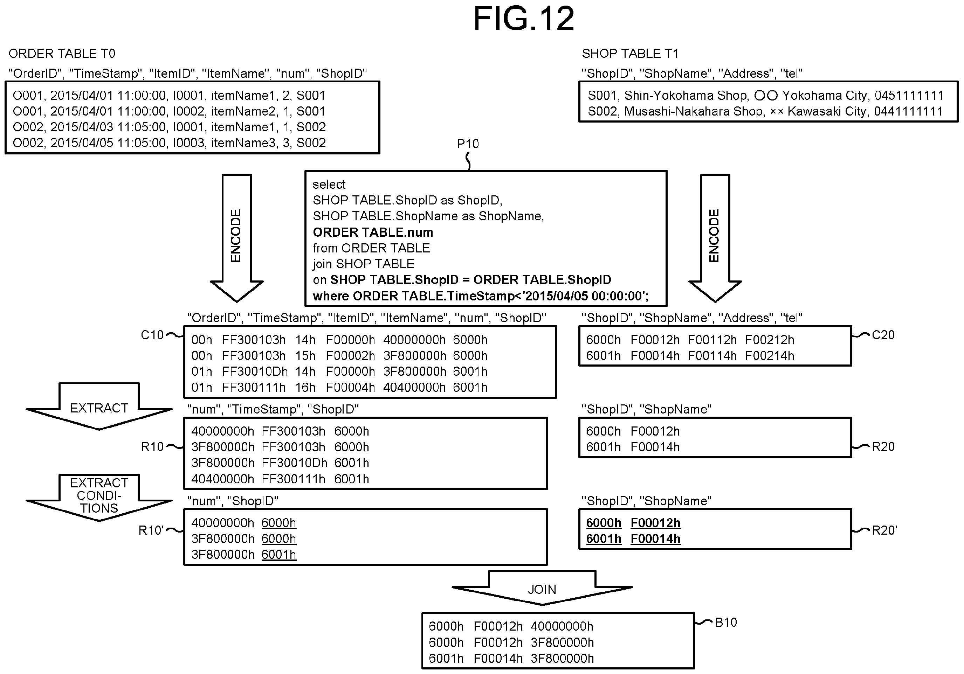

With reference to FIG. 12, the following describes an example of a flow of the encoding and the ETL processing according to the second embodiment. FIG. 12 is a diagram illustrating the example of the flow of the encoding and the ETL processing according to the second embodiment. In FIG. 12, the table definition 31 illustrated in FIG. 3 is used. In FIG. 12, the static dictionary 32 illustrated in FIG. 4 is used.

As illustrated in FIG. 12, if a title item is present in the order table T0 delimited by a comma, the encoder 10A sorts the records in the order of item values of the title item, and encodes the data in the order table T0, column by column for each record. In this case, since the title item "TimeStamp" is present in the order table T0, the encoder 10A sorts the records in the order of the item values of the title item. The encoder 10A encodes the sorted data in the order table T0, column by column for each record. The result of the encoding of the order table T0 is obtained as an encoded table C10. Since the title item "TimeStamp" is not present in the shop table T1, the encoder 10A encodes the data in the shop table T1, column by column for each record, without sorting the data. The result of the encoding of the shop table T1 is obtained as an encoded table C20.

Then, based on the processing instruction P0 for the encoded tables C10 and C20, the first extractor 21A extracts the processing target column information on processing target columns, and uses the extracted processing target column information to extract data in the processing target columns from the encoded tables C10 and C20. The processing instruction represented by reference numeral P0 instructs to join the encoded table C10 of the order table T0 with the encoded table C20 of the shop table T1 according to ShopID. The processing instruction instructs to refer to ShopID and ShopName of the encoded table C20 and num of the encoded table C10 from the joined table. Further, num is grouped by using ShopID and ShopName as keys.

For example, the first extractor 21A acquires the table names, and the item names of the reference items, the condition items, and the grouping items, from the processing instruction P0. In this case, the first extractor 21A acquires, as the table names, those of the encoded table C10 of the order table T0 and the encoded table C20 of the shop table T1, from the processing instruction P0. The first extractor 21A acquires ShopID and ShopName of the encoded table C20 and num of the encoded table C10 as the item names of the reference items, from the processing instruction P0. The first extractor 21A acquires ShopID of the respective encoded tables C10 and C20 as the item names of the condition items, from the processing instruction P0. The first extractor 21A acquires ShopID and ShopName as the item names of the grouping items, from the processing instruction P0.

Then, based on a processing instruction P10 for the encoded tables C10 and C20, the first extractor 21A extracts the processing target column information on the processing target columns, and uses the extracted processing target column information to extract data in the processing target columns from the encoded tables C10 and C20. The processing instruction represented by the reference numeral P10 instructs to join the encoded table C10 of the order table T0 with the encoded table C20 of the shop table T1 according to ShopID. The processing instruction instructs to refer to ShopID and ShopName of the encoded table C20 and num of the encoded table C10 from the joined table. Furthermore, the extracting condition (where) is satisfied if TimeStamp of the encoded table C10 is smaller than "2015/04/05 00:00:00".

For example, the first extractor 21A acquires the table names, and the item names of the reference items, the condition items, and the grouping items, from the processing instruction P10. In this case, the first extractor 21A acquires, as the table names, those of the encoded table C10 and the encoded table C20, from the processing instruction P10. The first extractor 21A acquires ShopID and ShopName of the encoded table C20 and num of the encoded table C10 as the item names of the reference items, from the processing instruction P10. The first extractor 21A acquires ShopID of the respective encoded tables C20 and C10 as item names of the condition items, from the processing instruction P10. The first extractor 21A acquires TimeStamp of the encoded table C10 as an item name of the condition items, from the processing instruction P10. The processing instruction P10 does not include any item name of a grouping item.

The first extractor 21A extracts, from the table definition 31, the processing target column information on items (columns) included in the processing instruction among the reference items, the grouping items, and the condition items thus acquired, for each table having one of the acquired table names. The first extractor 21A extracts item values located at the offsets 31c included in the extracted processing target column information, from the encoded tables C10 and C20 for the respective tables. In this case, the first extractor 21A extracts, from the encoded table C10, item values located at the offsets 31c (4, 1, 5) included in the extracted processing target column information on num, TimeStamp, and ShopID, respectively. As an example, the first extractor 21A extracts "40000000h" as an item value of num, "FF300103h" as an item value of TimeStamp, and "6000h" as an item value of ShopID from the first record. The first extractor 21A writes the data extracted from the encoded table C10 into an encoded file R10. In addition, the first extractor 21A extracts, from the encoded table C20, item values located at the offsets 31c (0, 1) included in the extracted processing target column information on ShopID and ShopName, respectively. As an example, the first extractor 21A extracts "6000h" as an item value of ShopID and "F00012h" as an item value of ShopName, from the first record. The first extractor 21A writes the data extracted from the encoded table C20 into an encoded file R20.

Since the item "TimeStamp" constituting the extracting condition is a title item, the second extractor 41 determines whether the item value of the item is already registered in the dynamic dictionary 33. If the second extractor 41 determines that the item value "2015/04/05 00:00:00" of the item "TimeStamp" constituting the extracting condition is not registered in the dynamic dictionary 33, the second extractor 41 searches the dynamic dictionary 33 for a character string that meets the extracting condition and that corresponds to a boundary of the range specification. In this case, "2015/04/03 11:05:00" is found as the character string that corresponds to the boundary of the range specification.

Then, the second extractor 41 replaces the item value of the item constituting the extracting condition with a dynamic code corresponding to the found character string. In this case, the second extractor 41 replaces the item value "2014/04/05 00:00:00" of the item constituting the extracting condition with the dynamic code "FF300010Dh" registered in the dynamic dictionary 33.

The second extractor 41 uses the dynamic dictionary 33 to extract a record that meets the extracting condition. In this case, the second extractor 41 extracts records in each of which "TimeStamp" has a dynamic code equal to or lower than the dynamic code "FF300010Dh". In this case, the second extractor 41 extracts records that have "FF300103h" and "FF30010Dh" as dynamic codes of "TimeStamp". The extraction results are obtained as an encoded file R10'.

Since the item "TimeStamp" constituting the extracting condition is not present in the encoded table C20, the second extractor 41 directly writes the encoded file R20 into an encoded file R20'.

Then, the editor 22 joins together the encoded files R10' and R20' according to a joining condition specified using the condition items. In this case, the editor 22 joins together the encoded files R10' and R20' according to the joining condition (shop table.ShopID = order table.ShopID). The editor 22 stores the result of the joining in a partial encoded file B10.

### Procedure of Encoding Processing

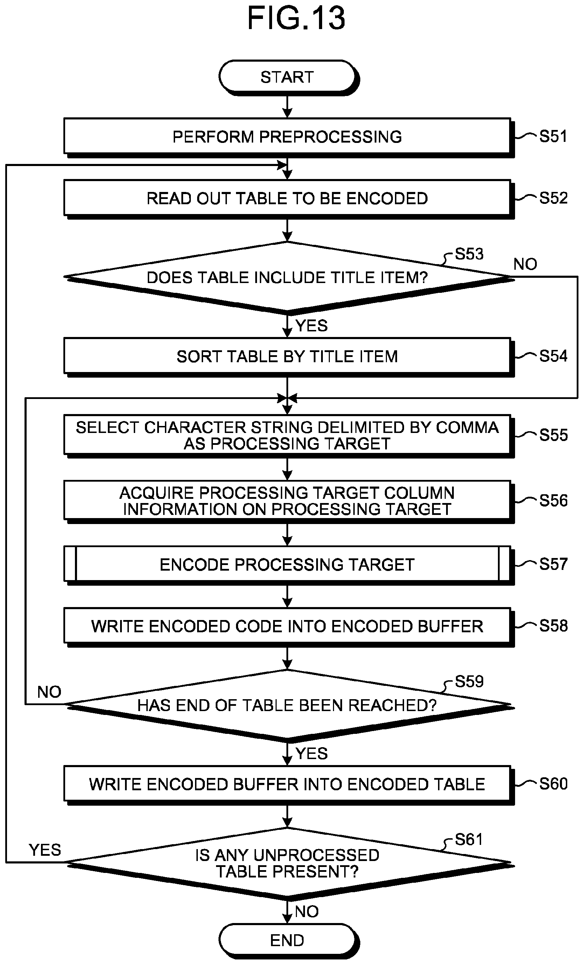

FIG. 13 is a flowchart illustrating the procedure of the encoding processing according to the second embodiment. The flowchart of FIG. 13 is obtained by adding Steps S53 and S54 to the flowchart of FIG. 7A. Hence, the same processing will be described only briefly below.

As illustrated in FIG. 13, the encoder 10A performs preprocessing (Step S51). The encoder 10A reads out a table to be encoded (Step S52).

The encoder 10A determines whether the read-out table includes a title item (Step S53). For example, the encoder 10A refers to the table definition 31, and determines whether the item names 31b corresponding to the table include an item name of which the encoding type 31d is F0h or higher. If the read-out table does not include a title item (No at Step S53), the encoder 10A proceeds the processing to Step S55.

If the read-out table includes a title item (Yes at Step S53), the encoder 10A sorts the read-out table by the item value of the title item (Step S54). The encoder 10A proceeds the processing to Step S55.

At Step S55, the encoder 10A selects a character string delimited by a comma as a processing target from the read-out table (Step S55). The encoder 10A acquires the processing target column information on the selected processing target (Step S56).

The encoder 10A then encodes the processing target (Step S57). The procedure of the processing of encoding the processing target is the same as that described with reference to FIG. 7B, and hence will not be described. The encoder 10A writes the encoded code into the encoded buffer (Step S58).

The encoder 10A determines whether the end of the table has been reached (Step S59). If the encoder 10A determines that the end of the table has not been reached (No at Step S59), the encoder 10A performs the processing at Step S55 to encode the next character string.

If the encoder 10A determines that the end of the table has been reached (Yes at Step S59), the encoder 10A writes the encoded buffer into an encoded table (Step S60). The encoder 10A determines whether any unprocessed table is present (Step S61). If the encoder 10A determines that an unprocessed table is present (Yes at Step S61), the encoder 10A proceeds the processing to Step S52 to read out the next table.

If the encoder 10A determines that no unprocessed table is present (No at Step S61), the encoder 10A ends the encoding processing.

### Procedure of ETL Processing

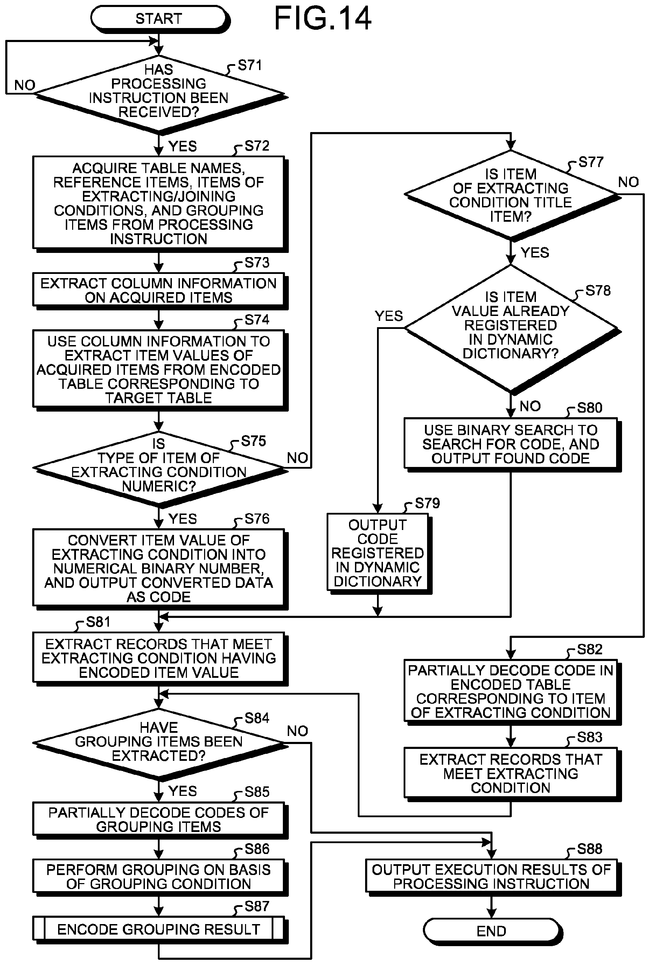

FIG. 14 is a flowchart illustrating the procedure of the ETL processing according to the second embodiment. As illustrated in FIG. 14, the ETL processor 20A determines whether a processing instruction for processing the encoded table has been received (Step S71). If the ETL processor 20A determines that a processing instruction for processing the encoded table has not been received (No at Step S71), the ETL processor 20A repeats the determination processing until the processing instruction is received.

If the ETL processor 20A determines that a processing instruction for processing the encoded table has been received (Yes at Step S71), the ETL processor 20A acquires table names, reference items, items of extracting/joining conditions, and grouping items from the processing instruction (Step S72).

The ETL processor 20A extracts column information on the acquired items from the table definition 31 (Step S73).

The ETL processor 20A uses the column information on the acquired items to extract item values of the acquired items from the encoded table serving as a target table (Step S74). The ETL processor 20A writes the extracted item values on a target table-by-target table basis.

The ETL processor 20A determines whether the item of the extracting condition is of a numeric type (Step S75). If the ETL processor 20A determines that the item of the extracting condition is of a numeric type (Yes at Step S75), the ETL processor 20A converts the item value of the extracting condition into a numerical binary number, and outputs the converted data as a code (Step S76). The ETL processor 20A proceeds the processing to Step S81 to extract records that meet the extracting condition from the encoded table.

If the ETL processor 20A determines that the item of the extracting condition is not of a numeric type (No at Step S75), the ETL processor 20A determines whether the item of the extracting condition is a title item (Step S77). If the ETL processor 20A determines that the item of the extracting condition is a title item (Yes at Step S77), the ETL processor 20A determines whether the item value of the extracting condition is already registered in the dynamic dictionary 33 (Step S78).

If the ETL processor 20A determines that the item value of the extracting condition is already registered in the dynamic dictionary 33 (Yes at Step S78), the ETL processor 20A outputs a code (dynamic code) corresponding to the item value registered in the dynamic dictionary 33 (Step S79). The ETL processor 20A proceeds the processing to Step S81.

If the ETL processor 20A determines that the item value of the extracting condition is not registered in the dynamic dictionary 33 (No at Step S78), the ETL processor 20A uses the binary search to search for a code, and outputs the found code (Step S80). For example, the ETL processor 20A searches the dynamic dictionary 33 for a code corresponding to an item value that is a character string (item value) meeting the extracting condition and that corresponds to a boundary of the range specification. The ETL processor 20A proceeds the processing to Step S81.

At Step S81, the ETL processor 20A extracts, from the encoded file, records that meet the extracting condition of which the item value is encoded (Step S81). The ETL processor 20A proceeds the processing to Step S84.

If, at Step S77, the ETL processor 20A determines that the item of the extracting condition is not a title item (No at Step S77), the ETL processor 20A partially decodes a code in the encoded table corresponding to the item of the extracting condition (Step S82). The ETL processor 20A extracts records that meet the extracting condition from the encoded file (Step S83). The ETL processor 20A proceeds the processing to Step S84.

At Step S84, the ETL processor 20A determines whether grouping items have been extracted (Step S84). If the ETL processor 20A determines that grouping items have not been extracted (No at Step S84), the ETL processor 20A proceeds the processing to Step S88.

If the ETL processor 20A determines that grouping items have been extracted (Yes at Step S84), the ETL processor 20A partially decodes the codes of the reference items related to the grouping (Step S85). The ETL processor 20A groups, based on a grouping condition, the item values that represent the partially decoded results (Step S86). The ETL processor 20A encodes the grouping result (Step S87). The procedure of the processing of encoding the processing target is the same as that described with reference to FIG. 7B, and hence will not be described. The ETL processor 20A proceeds the processing to Step S88.

At Step S88, the ETL processor 20A outputs the execution results of the processing instruction (Step S88). For example, the ETL processor 20A writes the codes of the reference items meeting the extracting condition into the partial encoded file. In addition, if the grouping result is present, the ETL processor 20A writes the grouping result together with the codes of the other reference items into the partial encoded file.

### Effect of Second Embodiment

In this manner, in the second embodiment described above, based on the processing instruction for processing the encoded tables in each of which data in a table delimited by the delimiter is encoded column by column for each record, the information processing device 1 extracts the processing target column information on the processing target columns. The information processing device 1 uses the processing target column information to extract the encoded data corresponding to the processing target columns from each of the encoded tables. The information processing device 1 writes the encoded data that meets the condition of the processing instruction specifying a range, into the partial encoded table. With this configuration, the information processing device 1 can refer to data that meets the condition specifying the range from the encoded table obtained by encoding the data in the table delimited by a comma, without performing the decoding processing.

The following describes some modifications in the embodiments described above. Not only the following modifications, but also appropriate design changes can be made within the scope not departing from the gist of the present invention.

For example, the embodiments have been described such that an encoding method using a numerical binary number conversion is applied to an item representing a numerical value. However, the encoding method using the dynamic dictionary 33 may be applied to the item representing a numerical value. That is, if the encoding type 31d of the item is 02h or 03h, the encoder 10A determines that the item is to be a numerical value, and uses the dynamic dictionary 33 to encode the item values of the item. If the extracting condition representing a range specification includes the numerical value item, the second extractor 41 only needs to decode the code of the numerical value item in the record included in the encoded file that constitutes the extracting condition, and then to extract the record that meets the extracting condition. As a result, the information processing device 1 encodes the item values of the item constituting the table using the static dictionary 32 and the dynamic dictionary 33. Consequently, the encoding processing can be performed using the unified method.

The processing procedures, the control procedures, the specific names, and the information including various types of data and parameters described in the embodiments can be freely modified unless otherwise specified.

### Hardware Configuration of Information Processing Device

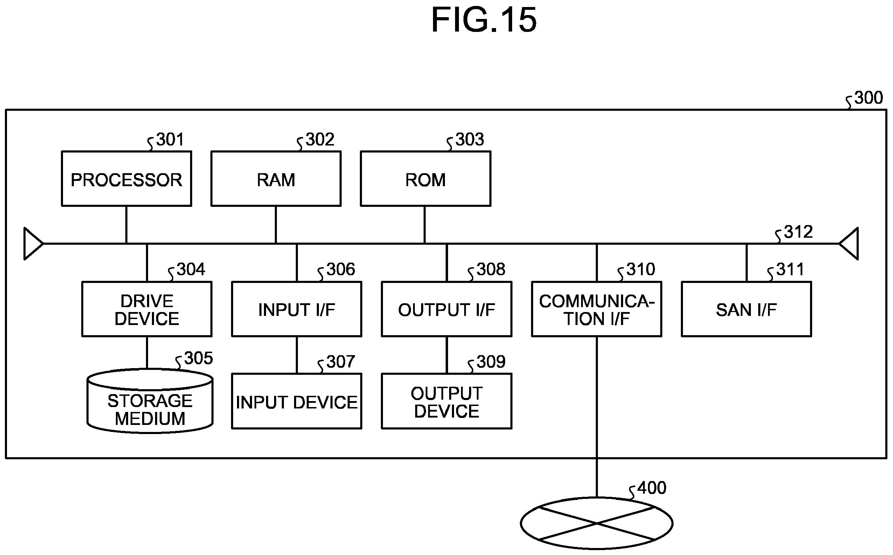

The following describes hardware and software used in the embodiments described above. FIG. 15 is a diagram illustrating an exemplary hardware configuration of a computer. A computer 300 includes, for example, a processor 301, a random access memory (RAM) 302, a read-only memory (ROM) 303, a drive device 304, a storage medium 305, an input interface (I/F) 306, an input device 307, an output interface (I/F) 308, an output device 309, a communication interface (I/F) 310, a storage area network (SAN) interface (I/F) 311, and a bus 312. The respective hardware components are connected together through the bus 312.

The RAM 302 is a readable/writable memory device, for which, for example, a semiconductor memory, such as a static RAM (SRAM) or a dynamic RAM (DRAM), or a flash memory other than a RAM is used. Examples of the ROM 303 include, but are not limited to, a programmable ROM (PROM). The drive device 304 is a device that performs at least either reading of information recorded on the storage medium 305 or writing of information to the storage medium 305. The storage medium 305 stores therein the information written by the drive device 304. The storage medium 305 is, for example, a storage medium, such as a hard disk, a flash memory such as a solid state drive (SSD), a compact disc (CD), a digital versatile disc (DVD), or a Blu-ray Disc. For example, the computer 300 is provided with the drive device 304 and the storage medium 305 for each of a plurality of types of storage media.

The input interface 306 is a circuit that is connected to the input device 307 and transmits input signals received from the input device 307 to the processor 301. The output interface 308 is a circuit that is connected to the output device 309 and causes the output device 309 to perform output according to an instruction from the processor 301. The communication interface 310 is a circuit that controls communication through a network 400. The communication interface 310 is, for example, a network interface card (NIC). The SAN interface 311 is a circuit that controls communication with a storage device connected to the computer 300 through a storage area network. The SAN interface 311 is, for example, a host bus adapter (HBA).

The input device 307 is a device that transmits an input signal according to an operation. The input device 307 is, for example, a key device, such as a button mounted on a keyboard or the body of the computer 300, or a pointing device, such as a mouse or a touchscreen panel. The output device 309 is a device that outputs information according to control by the computer 300. The output device 309 is, for example, an image output device (display device), such as a display, and/or an audio output device, such as a speaker. For example, an input/output device such as a touchscreen is used as the input device 307 and the output device 309. The input device 307 and the output device 309 may be integrated with the computer 300, or may be, for example, devices externally connected to the computer 300 without being included in the computer 300.

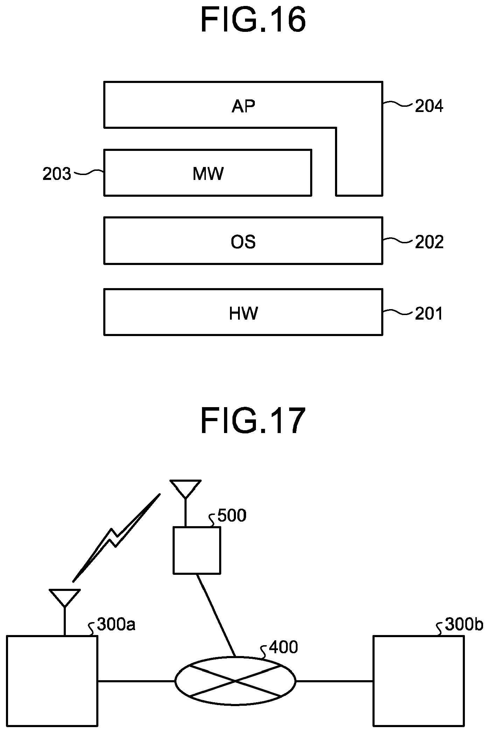

For example, the processor 301 reads out a computer program stored in the ROM 303 or the storage medium 305 into the RAM 302, and executes the processing of the encoder 10 and the decoder 20 according to procedures of the read-out computer program. At that time, the RAM 302 is used as a work area of the processor 301. The function of the storage unit 30 is carried out in the following way. The ROM 303 and the storage medium 305 store therein program files (such as those of an application program 204, middleware 203, and an operating system (OS) 202 to be described later) and data files (such as those of the table definition 31, the static dictionary 32, and the dynamic dictionary 33), and the RAM 302 is used as the work area of the processor 301. The computer program read out by the processor 301 will be described using FIG. 16.

FIG. 16 is a diagram illustrating an exemplary configuration of the computer program that operates on the computer. The operating system (OS) 202 that controls a hardware group (HW) 201 (301 to 312) illustrated in FIG. 16 operates on the computer 300. The processor 301 operates following a procedure according to the OS 202 to control and manage the hardware group (HW) 201 so as to cause the hardware group 201 to perform processing according to the application program (AP) 204 or the middleware (MW) 203. The middleware (MW) 203 or the application program (AP) 204 is read out into the RAM 302 and is executed by the processor 301 on the computer 300.

When the encoding function is called, the processor 301 performs processing based on at least a part of the middleware 203 or the application program 204 (performs the processing by controlling the hardware group 201 based on the OS 202) so as to carry out the functions of the encoder 10 and the decoder 20. Each of the encoding function and the decoding function may be included in the application program 204, or may be a part of the middleware 203 that is executed by being called according to the application program 204.

FIG. 17 illustrates an exemplary configuration of devices in a system according to the embodiments. The system in FIG. 17 includes a computer 300a, a computer 300b, a base station 500, and the network 400. The computer 300a is connected in at least one of wireless and wired manners to the network 400 connected to the computer 300b.

Either of the computers 300a and 300b illustrated in FIG. 17 may include the encoder 10 and the decoder 20 illustrated in FIG. 2. The computer 300b may include the function of the encoder 10 and the computer 300a may include the function of the decoder 20; or alternatively, the computer 300a may include the function of the encoder 10 and the computer 300b may include the function of the decoder 20. Both the computers 300a and 300b may include the function of the encoder 10 and the function of the decoder 20.

Either of the computers 300a and 300b illustrated in FIG. 17 may include the extractor 21, the editor 22, and the partial decoder 23 illustrated in FIG. 2. The computer 300b may include the functions of the extractor 21 and the editor 22, and the computer 300a may include the function of the partial decoder 23; or alternatively, the computer 300a may include the functions of the extractor 21 and the editor 22, and the computer 300b may include the function of the partial decoder 23. Both the computers 300a and 300b may include the functions of the extractor 21 and the editor 22 and the function of the partial decoder 23.

According to one aspect of the present invention, data in an encoded file obtained by encoding CSV-formatted data delimited by a delimiter can be, for example, referred to, copied, or replaced, without the need to decode the data. According to another aspect of the present invention, only data that needs to be referred to can be decoded from the encoded file obtained by encoding the CSV-formatted data delimited by the delimiter, without the need to collectively decode the data from the top thereof.

## Claims

1. An encoding processing program that causes a computer (300) to execute a process comprising:
extracting (21) processing target column information on processing target columns based on a processing instruction for a plurality of encoded tables, each of the plurality of encoded tables including a plurality of encoded column data, each of the plurality of encoded column data encoded from corresponding column data, respectively, that is delimited by a delimiter; and
generating (22) a partial encoded table including the processing target columns from the plurality of encoded tables, using the processing target column information.

2. The encoding processing program according to claim 1, wherein the generating (22) includes using the processing target column information to extract encoded data corresponding to the processing target columns from each of the plurality of encoded tables, and generating the partial encoded table that includes encoded data meeting a condition of the processing instruction.

3. The encoding processing program according to claim 1, wherein the generating (22) includes using the processing target column information to extract encoded data corresponding to the processing target columns from each of the plurality of encoded tables, and writing, out of the extracted encoded data, encoded data that meets a condition of the processing instruction specifying a range, into the partial encoded table.

4. An encoding processing device (1) comprising:
an extractor (21) configured to extract processing target column information on processing target columns based on a processing instruction for a plurality of encoded tables, each of the plurality of encoded tables including a plurality of encoded column data, each of the plurality of encoded column data encoded from corresponding column data, respectively, that is delimited by a delimiter; and
a generator (22) configured to generate a partial encoded table including the processing target columns from the plurality of encoded tables, using the processing target column information.

5. An encoding processing method for causing a computer (300) to execute a process comprising:
extracting (21) processing target column information on processing target columns based on a processing instruction for a plurality of encoded tables, each of the plurality of encoded tables including a plurality of encoded column data, each of the plurality of encoded column data encoded from corresponding column data, respectively, that is delimited by a delimiter; and
generating (22) a partial encoded table including the processing target columns from the plurality of encoded tables, using the processing target column information.

6. A decoding processing program that causes a computer (300) to execute a process comprising:
extracting (21), based on a processing instruction for decoding a predetermined processing target in an encoded table in which data represented by columns in a table delimited by a delimiter is encoded column by column for each record, processing target column information on columns of the processing target; and
using (23) the processing target column information to extract codes corresponding to the columns of the processing target from the encoded table, and to decode the extracted codes using an automaton for partial decoding.

7. A decoding processing device (1) comprising:
an extractor (21) configured to extract, based on a processing instruction for decoding a predetermined processing target in an encoded table in which data represented by columns in a table delimited by a delimiter is encoded column by column for each record, processing target column information on columns of the processing target; and
a decoder (23) configured to use the processing target column information to extract codes corresponding to the columns of the processing target from the encoded table, and to decode the extracted codes using an automaton for partial decoding.

8. A decoding processing method for causing a computer (300) to execute a process comprising:
extracting (21), based on a processing instruction for decoding a predetermined processing target in an encoded table in which data represented by columns in a table delimited by a delimiter is encoded column by column for each record, processing target column information on columns of the processing target; and
using (23) the processing target column information to extract codes corresponding to the columns of the processing target from the encoded table, and to decode the extracted codes using an automaton for partial decoding.
